# EUROPÄISCHE PATENTSCHRIFT

(11) **EP 2 742 219 B1**
(45) Veröffentlichungstag und Bekanntmachung des Hinweises auf die Patenterteilung: **13.06.2018**
(21) Anmeldenummer: 12740049.7
(22) Anmeldetag: 17.07.2012
(51) Int. Cl.: F02B 37/00, F02B 37/007, F02B 37/02

(54) **VERBRENNUNGSKRAFTMASCHINE FÜR EINEN KRAFTWAGEN**
INTERNAL COMBUSTION ENGINE FOR VEHICLE
MOTEUR À COMBUSTION INTERNE POUR VÉHICULE

(30) Priorität: 09.08.2011 DE 102011109762
(43) Veröffentlichungstag der Anmeldung: 18.06.2014
(73) Patentinhaber: Daimler AG, 70327 Stuttgart (DE)
(72) Erfinder: BRINKERT, Nils, 70376 Stuttgart (DE); KUHN, Thomas, 70329 Stuttgart (DE)
(74) Vertreter: JENSEN & SON
(86) Internationale Anmeldenummer: PCT/EP2012/002993
(87) Internationale Veröffentlichungsnummer: WO 2013/020632

(56) Entgegenhaltungen:
- EP-A1- 2 246 543
- DE-A1- 19 826 355
- US-A- 4 339 922

## Beschreibung

Die Erfindung betrifft eine Verbrennungskraftmaschine für einen Kraftwagen.

Die DE 10 2004 015 108 B4 offenbart eine Brennkraftmaschine mit mehreren Zylindern, mit einem Ansaugleitungssystem, mit einem Abgasleitungssystem, mit einer Abgasrückführung und mit wenigstens einem Abgasturbolader. Eine Anzahl erster Zylinder ist ständig mit einer Abgassammelleitung verbunden, die das Abgas einer Abgasturbine des Abgasturboladers zuführt. Das Abgas wenigstens eines zweiten Zylinders oder einer Gruppe von zweiten Zylindern ist wahlweise in eine mit dem Ansaugleitungssystem verbundene Abgasrückführleitung oder der Abgasturbine des Abgasturboladers zuführbar. Es sind wenigstens zwei unterschiedliche, für das Abgasangebot zweier unterschiedlicher Lastzustände im Teillastbereich mit unterschiedlicher an der Abgasrückführung beteiligter Anzahl zweiter Zylinder optimierte Turbinenflächen vorgesehen, die abhängig von der Zuschaltung der zweiten Zylinder zur Abgasrückführung zu- und abschaltbar sind. Ferner ist vorgesehen, dass die Zu- und Abschaltung von Turbinenflächen in Abhängigkeit von den Schaltstellungen der Schaltorgane erfolgt.

Die DE 198 26 355 A1 offenbart eine Ventileinrichtung zur Steuerung von Abgasturbolader mit zumindest zwei Fluten. Mittels der Ventileinrichtung, bestehend aus zwei Ventilelementen, können zunächst die Abgasfluten und dann eine Abgasflut mit einer Verbindungsleitung verbunden werden. Die Verbindungsleitung kann in einer ersten Ausführungsform eine erste Abgasflut der Abgasleitung einer ersten Zylindergruppe mit einer ersten Abgasflut der Abgasleitung einer zweiten Zylindergruppe verbinden. Die Ventileinrichtung ist innerhalb der Abgasleitung stromauf zu einer durchströmbaren Turbine angeordnet. Die Schaltungsvarianten der Ventilelemente ermöglichen somit den Stau- oder Stoßbetrieb der einzelnen Abgasleitungen und den Stoßbetrieb beider Abgasleitungen.

Die EP 2 246 542 A1 offenbart eine Verbrennungskraftmaschine für einen Kraftwagen, mit ersten nebeneinander liegenden Zylindern und zweiten nebeneinander liegenden Zylindern, und mit einem Abgastrakt mit einem ersten Abgaskrümmer und einem zweiten Abgaskrümmer, wobei die ersten Zylinder dem ersten Abgaskrümmer mit einer ersten Abgasflut zugeordnet sind und die zweiten Zylinder dem zweite Abgaskrümmer mit einer zweiten Abgasflut zugeordnet sind, und mit einem ersten Abgasturbolader und einem zweiten Abgasturbolader, wobei der erste Abgasturbolader eine im Abgastrakt angeordnete erste Turbine umfasst und der zweite Abgasturbolader eine im Abgastrakt angeordnete zweite Turbine umfasst. Der erste und der zweite Abgaskrümmer sind mittels einer Ventileinrichtung miteinander verbindbar.

Die US 4,339, 922 offenbart eine Verbrennungskraftmaschine, mit ersten nebeneinander liegenden Zylindern und zweiten nebeneinander liegenden Zylindern, und mit einem Abgastrakt mit einem ersten Abgaskrümmer und einem zweiten Abgaskrümmer, wobei die ersten Zylinder dem ersten Abgaskrümmer mit einer ersten Abgasflut zugeordnet sind und die zweiten Zylinder dem zweite Abgaskrümmer mit einer zweiten Abgasflut zugeordnet sind. Ein Abgasturbolader weist zwei voneinander getrennte Fluten auf, die jeweils mit der ersten Abgasflut und der zweiten Abgasflut verbunden sind. Die Fluten sind mittels einer Ventileinrichtung miteinander verbindbar, wobei einer ersten Stellung der Ventileinrichtung die beiden Fluten fluidisch zusammengeführt werden und eine erste Turbine des Abgasturboladers mit Abgas der ersten und der zweiten Zylinder angetrieben wird. In einer zweiten Stellung der Ventileinrichtung werden die beiden Fluten fluidisch voneinander getrennt, so dass die erste Turbine des Abgasturboladers mit Abgas aus den ersten Zylindern und eine zweite Turbine des Abgasturboladers mit Abgas aus den zweiten Zylindern angetrieben werden.

Es ist Aufgabe der vorliegenden Erfindung, eine Verbrennungskraftmaschine für einen Kraftwagen bereitzustellen, welche einen effizienteren Betrieb ermöglicht.

Diese Aufgabe wird durch eine Verbrennungskraftmaschine für einen Kraftwagen mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Eine erfindungsgemäße Verbrennungskraftmaschine für einen Kraftwagen, insbesondere einen Personenkraftwagen, umfassend erste nebeneinander liegende Zylinder und zweite nebeneinander liegende Zylinder, und mit einem Abgastrakt mit einem ersten Abgaskrümmer und einem zweiten Abgaskrümmer, wobei die ersten Zylinder dem ersten Abgaskrümmer mit einer ersten Abgasflut zugeordnet sind und die zweiten Zylinder dem zweiten Abgaskrümmer mit einer zweiten Abgasflut zugeordnet sind.

Es sind ein erster Abgasturbolader und wenigstens ein zweiter Abgasturbolader vorgesehen. Der erste Abgasturbolader umfasst eine erste Turbine, die in einem Abgastrakt der Verbrennungskraftmaschine angeordnet ist. Der zweite Abgasturbolader umfasst eine zweite Turbine, welche ebenfalls in dem Abgastrakt der Verbrennungskraftmaschine angeordnet ist. Die erste Turbine und die zweite Turbine sind mittels einer zwischen wenigstens drei Stellungen schaltbaren und stromauf der ersten Turbine und der zweiten Turbine in dem Abgastrakt angeordneten Ventileinrichtung der Verbrennungskraftmaschine unterschiedlich betreibbar. In einer ersten Stellung der Ventileinrichtung und in einer zweiten Stellung der Ventileinrichtung ist nur die erste Turbine mit Abgas der Verbrennungskraftmaschine beaufschlagbar wohingegen in einer dritten Stellung der Ventileinrichtung die erste Turbine und die zweite Turbine mit Abgas der Verbrennungskraftmaschine beaufschlagbar sind. Dadurch ist eine sogenannte Registeraufladung dargestellt, mittels welcher die erfindungsgemäße Verbrennungskraftmaschine in Abhängigkeit von ihrem Last- bzw. Betriebspunkt besonders effizient betrieben und aufgeladen werden kann.

Die erste Turbine weist eine erste Flut und eine zweite Flut auf, wobei die erste Flut mit der ersten Abgasflut und die zweite Flut mit der zweiten Abgasflut verbunden sind.
In der ersten Stellung der Ventileinrichtung ist die erste Flut von Abgas der ersten Zylinder durchströmbar und die zweite Flut ist von Abgas der zweiten Zylinder durchströmbar. Das bedeutet mit anderen Worten, dass Abgas aus den ersten Zylindern ausschließlich über die erste Flut ein in der ersten Turbine angeordnetes Turbinenrad anströmt, und Abgas aus der zweiten Abgasflut ausschließlich über die zweite Flut das Turbinenrad anströmt. Somit ist in der ersten Stellung der Ventileinrichtung eine Stossaufladung des ersten Abgasturboladers realisierbar.

Die fluidische Trennung der Fluten der ersten Turbine führt auch zu einem besonders vorteilhaften und günstigen Ansprechverhalten der erfindungsgemäßen Verbrennungskraftmaschine. Ebenso kann diese vorteilhafterweise besonders hohe Drehmomente auch bei geringen Drehzahlen bereitstellen.
Ein weiterer Vorteil der mehrflutigen Ausgestaltung der ersten Turbine und der fluidischen Trennung der Fluten ist, dass die erste Turbine hinsichtlich ihrer Strömungsquerschnitte relativ groß ausgestaltet werden kann, was wiederum zu einem erwünscht hohen Wirkungsgrad der ersten Turbine führt bei gleichzeitiger Realisierung hoher Mengen an rückzuführendem Abgas.

Die Stoßaufladung ermöglicht eine besonders effiziente Aufladung der Verbrennungskraftmaschine, sodass diese mit einem nur sehr geringen Kraftstoffverbrauch mit geringen CO₂-Emissionen betrieben werden kann. Durch die mehrflutige Ausgestaltung der ersten Turbine und die entsprechende Trennung der ersten Flut und der zweiten Fluten der ersten Turbine ist die erfindungsgemäße Verbrennungskraftmaschine somit besonders vorteilhaft in dem Stoßaufladebetrieb betreibbar, was den geringen Kraftstoffverbrauch und die geringen CO₂-Emissionen der Verbrennungskraftmaschine begünstigt. Dies bedeutet, dass bei der Verbrennungskraftmaschine die besonders vorteilhafte Registeraufladung mit der besonders vorteilhaften Stoßaufladung kombiniert ist, was mit einem effizienten Betrieb der Verbrennungskraftmaschine einhergeht.

In der zweiten Stellung der Ventileinrichtung sind die erste Abgasflut und die zweite Abgasflut fluidisch zusammenführbar. Das heißt, Abgas der ersten Abgasflut und der zweiten Abgasflut durchströmt die erste Flut und die zweite Flut. Das Abgas der ersten Abgasflut und der zweiten Abgasflut wird mit Hilfe der Ventileinrichtung zusammengeführt, sodass Abgas der ersten Abgasflut und der zweiten Abgasflut gemeinsam die erste Flut bzw. die zweite Flut durchströmen kann. Somit kann eine Stauaufladung des ersten Abgasturboladers realisiert werden. Dies bedeutet beispielsweise, dass die Zusammenführung der Abgasfluten in die Ventileinrichtung, beispielsweise in ein Gehäuse der Ventileinrichtung, integriert ist. Dadurch weist die erfindungsgemäße Verbrennungskraftmaschine einen besonders geringen Bauraumbedarf auf, was insbesondere in einem platzkritischem Bereich wie einem Motorraum des Kraftwagens, insbesondere eines Personenkraftwagens, zur Vermeidung und/oder zur Lösung von Package-Problemen führt.

Zusätzliche und separate Abgasverrohrungen zum Zusammenführen der Abgasfluten sind nicht von Nöten und nicht vorgesehen, was die Teileanzahl, das Gewicht und die Kosten der erfindungsgemäßen Verbrennungskraftmaschine in einem geringen Rahmen hält.

Eine Registeraufladung des ersten Abgasturboladers und des zweiten Abgasturboladers ist in der dritten Stellung der Ventileinrichtung realisierbar. In der dritten Stellung der Ventileinrichtung werden die erste Abgasflut, die zweite Abgasflut und eine dritte Abgasflut fluidisch zusammengeführt. Die dritte Abgasflut ist als Abgasanströmung der zweiten Turbine ausgebildet, das heißt, mit Hilfe der dritten Abgasflut ist Abgas der Verbrennungskraftmaschine der zweiten Turbine zuführbar, so dass der erste Abgasturbolader und der zweite Abgasturbolader gemäß der Registeraufladung gleichzeitig in Betrieb sind.

Zur Darstellung eines besonders geringen Kraftstoffverbrauchs und damit geringer CO₂-Emissionen sowie zur Realisierung zumindest geringer Stickoxid-Emissionen von Verbrennungskraftmaschinen wie der erfindungsgemäßen Verbrennungskraftmaschine werden die erste Turbine und die zweite Turbine hinsichtlich ihrer Dimensionen und insbesondere hinsichtlich ihrer Strömungsquerschnitte, welche von dem Abgas der Verbrennungskraftmaschine durchströmbar sind, besonders klein dimensioniert. Dadurch kann eine besonders vorteilhaftes Aufstauverhalten der Turbinen dargestellt werden, sodass eine besonders hohe Menge an Abgas von dem Abgastrakt zu einem Ansaugtrakt der Verbrennungskraftmaschine rückführbar und in den Ansaugtrakt einleitbar ist. Dadurch kann von der Verbrennungskraftmaschine angesaugte Luft mit Abgas beaufschlagt werden, das bei einer Verbrennung eines Luft-Kraftstoff-Gemischs in den Brennräumen als Inertgas wirkt. Dies hält die Entstehung von Stickoxid-Emissionen gering.

Herkömmlicherweise führt diese hinsichtlich ihrer Dimensionen besonders geringe Ausgestaltung der Turbinen zu einem unerwünscht geringen Wirkungsgrad der Turbinen, was wiederum zu einer nicht optimalen Abgasenergienutzung führt, welches über Ladungswechselverluste zu einem unerwünscht hohen Kraftstoffverbrauch führt. Damit bleiben herkömmlicherweise CO₂-Einsparpotenziale ungenutzt, falls keine entsprechenden Gegenmaßnahmen getroffen sind.

Bei der erfindungsgemäßen Verbrennungskraftmaschine können die Turbinen die geschilderten, vorteilhaften Aufstauverhalten aufweisen und ermöglichen, sodass entsprechend hohe Mengen an rückzuführendem Abgas darstellbar sind. Durch die mehrflutige Ausgestaltung der ersten Turbine, wobei die Fluten zumindest bereichsweise fluidisch voneinander getrennt sind, kann ein Ausschiebevorgang von Abgas aus den Zylindern bzgl. eines Restgasgehalts an Abgas besonders vorteilhaft gestaltet werden. Dadurch kann die Notwendigkeit zur Darstellung eines besonders schmalen Nockens zum Betätigen jeweiliger Auslassventile der Brennräume bei geringen Drehzahlen der Verbrennungskraftmaschine gering gehalten werden. Darüber hinaus ist die Auslegung von Gaswechselventilen wie auch des Auslassventils der Verbrennungskraftmaschine relativ einfach und dadurch kostengünstig.

Durch die Schaltbarkeit der Ventileinrichtung ist eine Schaltbarkeit zwischen der ersten Turbine und der zweiten Turbine geschaffen, wodurch somit wahlweise die erste Turbine alleine oder die zweite Turbine zusätzlich zur ersten Turbine mit Abgas beaufschlagt wird und somit angetrieben werden kann und somit die Ventileinrichtung mindestens eine erste Stellung, eine zweite Stellung und eine dritte Stellung aufweist. In der ersten Stellung wird die erste Turbine von Abgas angetrieben, indem das Abgas die zwei zumindest bereichsweise voneinander getrennten Fluten durchströmt. In der zweiten Stellung wird ebenfalls nur die erste Turbine angetrieben, allerdings wird das Abgas der ersten Abgasflut und der zweiten Abgasflut stromauf des Turbinenrades mit Hilfe der Ventileinrichtung zusammengeführt, so dass unabhängig von den Zylinderbänken Abgas das Turbinenrad anströmt. In der dritten Stellung wird zusätzlich die zweite Turbine mit Abgas beaufschlagt und angetrieben. Dadurch sind Freiheitsgrade der Verbrennungskraftmaschine geschaffen, wodurch eine besonders einfache und zumindest im Wesentlichen drehmomentneutrale Umschaltung zwischen den Turbinen realisiert ist. Dies geht mit einem besonders geringen Kraftstoffverbrauch und damit mit geringen CO₂-Emissionen einher. Ferner ist die Möglichkeit geschaffen, hohe Aufladegrade auch bei hohen Drehzahlen der Verbrennungskraftmaschine günstig zu gestalten. Diese hohen Aufladegrade sind dabei beispielsweise bei der als Ottomotor ausgebildeten erfindungsgemäßen Verbrennungskraftmaschine gegebenenfalls ohne Anfetten, d. h. ohne zusätzlichen Kraftstoffaufwand, realisierbar.

Dadurch ist die erfindungsgemäße Verbrennungskraftmaschine besonders bedarfsgerecht und besonders effizient an unterschiedliche Betriebspunkte anpassbar, woraus ein besonders effizienter und kraftstoffverbrauchsarmer Betrieb der erfindungsgemäßen Verbrennungskraftmaschine resultieren.

Die erfindungsgemäße Verbrennungskraftmaschine weist idealerweise für die ersten und zweiten Zylinder jeweils zwei oder drei Zylinder auf und ist dementsprechend als Vier-Zylinder- und/oder Sechs-Zylinder-Motor ausgebildet, da insbesondere bei einem solchen Vier-Zylinder- oder Sechs-Zylinder-Motor Ladungswechsel von der mehrflutigen Ausgestaltung der ersten Turbine und damit von der Trennung der Brennräume bzw. deren Aufteilung auf die jeweiligen Abgasfluten profitieren können. So können Ladungswechselverluste gering gehalten werden. Dies geht mit einem besonders geringen Kraftstoffverbrauch sowie mit geringen CO₂-Emissionen einher.

Bei einer vorteilhaften Ausführungsform der Erfindung weist die erste Turbine des ersten Abgasturboladers einen größeren von Abgas der Verbrennungskraftmaschine durchströmbaren effektiven Strömungsquerschnitt auf als die zweite Turbine des zweiten Abgasturboladers. Dabei kann die erste Turbine ergänzend oder alternativ eine größere Massenträgheit aufweisen als die zweite Turbine. Die Massenträgheit bezieht sich dabei auf die Rotationsmassenträgheit eines ersten, in einem ersten Turbinegehäuse der ersten Turbine angeordneten Turbinenrads und eines zweiten, in einem zweiten Turbinegehäuse der zweiten Turbinen angeordneten Turbinenrads.

In der ersten Stellung der Ventileinrichtung, welche bevorzugt bei niedrigen Lastbereich der Verbrennungskraftmaschine gewählt wird, ist das Turbinenrad und somit der erste Abgasturbolader im Stossbetrieb betreibbar, sodass ein so genanntes Turboloch trotz der höheren Massenträgheit relativ schnell überwindbar ist.

In der zweiten Stellung der Ventileinrichtung, welche bevorzugt in dem Grenzbereich zwischen niedrigem Last- und Drehzahlbereich und mittlerem Last- und Drehzahlbereich gewählt wird, ist der erste Abgasturbolader im Staubetrieb betreibbar, so dass nun, da der erste Abgasturbolader nun nicht mehr aus einem Stillstand heraus beschleunigt werden muss, wie beim Stoßbetrieb, aufgrund der im Vergleich mit der ersten Stellung gleichmäßigeren Beaufschlagung der Turbine, eine Kraftstoffreduzierung aufgrund einer Wirkungsgradsteigerung des Abgasturboladers, wiederum im Vergleich mit einem Stoßbetrieb des Abgasturboladers gemäß der ersten Stellung, herbeiführbar ist.

Im oberen Last- und Drehzahlbereich der Verbrennungskraftmaschine sind die beiden Abgasturbolader im Registerbetrieb betreibbar, wobei hierzu die dritte Stellung der Ventileinrichtung zu wählen ist. Ein besonderer Vorteil der Zuschaltung des zweiten Abgasturbolader mit Hilfe der Ventileinrichtung ist, dass ein üblicherweise bei der Zuschaltung des zweiten Abgasturboladers im Betrieb der Registeraufladung auftretender Ladedruckeinbruch reduzierbar ist.

So weist die erfindungsgemäße Verbrennungskraftmaschine sowohl in den hohen Last- und Drehzahlbereichen und Volllastbereichen sowie in demgegenüber geringen Last- und Drehzahlbereichen eine besonders hohe und vorteilhafte Fahrdynamik und ein besonders vorteilhaftes Fahrverhalten auf bei gleichzeitiger Realisierung eines nur geringen Kraftstoffverbrauchs und geringen CO₂-Emissionen.

Bei einer weiteren vorteilhaften Ausführungsform der Erfindung ist der ersten Turbine ein erster Verdichter und der zweiten Turbine ein zweiter Verdichter zugeordnet. Der erste und der zweite Verdichter sind in einem Ansaugtrakt der Verbrennungskraftmaschine angeordnet. Der erste Verdichter ist von der ersten Turbine antreibbar. Der zweite Verdichter ist von der zweiten Turbine antreibbar. Mittels der Verdichter ist von der Verbrennungskraftmaschine angesaugte Luft zu verdichten. Die Umschaltbarkeit zwischen den Turbinen mittels der Ventileinrichtung birgt auch den Vorteil, dass dadurch auch die Verdichter besonders effizient und bedarfsgerecht angetrieben werden können. So kann die Verbrennungskraftmaschine in zumindest nahezu allen Lastpunkten ihres Kennfelds zumindest im Wesentlichen optimal mit verdichteter Luft (Ladeluft) versorgt werden, sodass sie zumindest nahezu im gesamten Kennfeld auf hohe Leistungen und/oder hohe Drehmomente zumindest nahezu verzögerungsfrei bereitstellen kann. Das sog. Turboloch kann dabei vermieden werden.

Die erfindungsgemäße Verbrennungskraftmaschine ist nach dem sogenannten Downsizing-Konzept ausbildbar. Dabei weist die Verbrennungskraftmaschine ein nur geringes Hubvolumen auf, kann jedoch zumindest nahezu in dem gesamten Kennfeld besonders hohe von einem Fahrer des Kraftwagens angeforderte Leistungen und/oder Drehmomente infolge der besonders vorteilhaften Aufladung durch die Verdichter bereitstellen. Dies hält den Bauraumbedarf und insbesondere das Gewicht der erfindungsgemäßen Verbrennungskraftmaschine gering, sodass der gesamte Kraftwagen mit einem nur sehr geringen Energieverbrauch anzutreiben ist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen und in Alleinstellung verwendbar, ohne den Rahmen der Erfindung zu verlassen.

Die Zeichnung zeigt in:

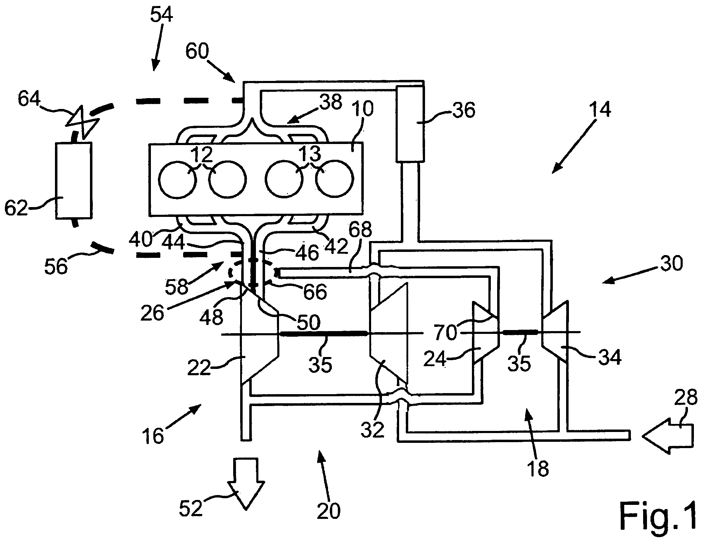

- Fig. 1: eine Prinzipdarstellung einer Verbrennungskraftmaschine mit zwei Abgasturboladern, mittels welchen eine Registeraufladung der Verbrennungskraftmaschine dargestellt ist, wobei die
- Fig. 1: Verbrennungskraftmaschine als vierzylindrige HubkolbenVerbrennungskraftmaschine ausgebildet ist;
- Fig. 2: eine Prinzipdarstellung einer alternativen Ausführungsform der Verbrennungskraftmaschine gemäß Fig. 1, wobei die Verbrennungskraftmaschine als sechszylindrige HubkolbenVerbrennungskraftmaschine ausgebildet ist; und
- Fig. 3: eine schematische Perspektivansicht einer Ventileinrichtung der Verbrennungskraftmaschine gemäß den Fig. 1 und 2, mittels welcher wahlweise eine erste Turbine eines ersten der Abgasturbolader oder eine zweite Turbine des zweiten der Abgasturbolader mit Abgas der Verbrennungskraftmaschine beaufschlagbar und so antreibbar ist.

Die Fig. 1 zeigt eine Verbrennungskraftmaschine 10, welche als vierzylindrige Hubkolben-Verbrennungskraftmaschine ausgebildet ist und erste nebeneinander liegende Zylinder 12 mit zwei Zylindern und zweite nebeneinander liegende Zylinder 13 mit zwei Zylindern aufweist. Die Verbrennungskraftmaschine 10 umfasst eine Aufladeeinrichtung 14 mit einem ersten Abgasturbolader 16 und einem zweiten Abgasturbolader 18. Mittels der Aufladeeinrichtung 14 ist zum einen eine Stoßaufladung, eine Stauaufladung und eine Registeraufladung darstellbar, wodurch die Verbrennungskraftmaschine 10 in den genannten Auflademodi mittels der Aufladungseinrichtung 14 betreibbar ist.

Dazu umfasst der erste Abgasturbolader 16 eine in einem Abgastrakt 20 der Verbrennungskraftmaschine 10 angeordnete erste Turbine 22. Der zweite Abgasturbolader 18 umfasst eine im Abgastrakt 20 angeordnete zweite Turbine 24. Darüber hinaus umfasst die Aufladeeinrichtung 14 ein Verstellventil 26, welches ebenso in dem Abgastrakt 20, und zwar stromauf der ersten Turbine 22 und stromauf der zweiten Turbine 24 angeordnet ist. Das Verstellventil 26 ist derart ausgebildet, dass es in eine erste Stellung, in eine zweite Stellung und in eine dritte Stellung bringbar ist. Das bedeutet, dass in der ersten Stellung die erste Turbine 22 mit Abgas der Verbrennungskraftmaschine 10 gemäß einer Stoßaufladung beaufschlagbar ist, in der zweiten Stellung die erste Turbine 22 gemäß einer Stauaufladung beaufschlagbar ist und in der dritten Stellung des Verstellventils 26 sind die erste Turbine 22 und die zweite Turbine 24 mit Abgas der Verbrennungskraftmaschine gemäß einer Registeraufladung beaufschlagbar.

Das Schalten des Verstellventils 26 erfolgt dabei in Abhängigkeit von Lastpunkten in einem Kennfeld der Verbrennungskraftmaschine 10. In niedrigen Last- und Drehzahlbereichen ist bevorzugt nur die erste Turbine 22 mit Abgas beaufschlagt. In mittleren und hohen Last- und Drehzahlbereichen bis hin zu Volllastbereichen des Kennfelds sind hingegen die erste Turbine 22 und die zweite Turbine 24 aktiviert.

Während eines Betriebs der Verbrennungskraftmaschine 10 saugt diese Luft aus der Umgebung an, was durch einen Richtungspfeil 28 dargestellt ist. Die Luft strömt über Ansaugverrohrungen eines Ansaugtrakts 30 der Verbrennungskraftmaschine 10 zu einem ersten Verdichter 32 des ersten Abgasturboladers 16 oder zu einem zweiten Verdichter 34 des zweiten Abgasturboladers 18, je nach dem, welche der Turbinen 22 oder 24 aktiviert ist. Die Luft wird dann von dem ersten Verdichter 32 oder dem ersten Verdichter 32 und dem zweiten Verdichter 34, je nach dem, ob die erste Turbine 22 oder die erste Turbine 22 und die zweite Turbine 24 aktiviert sind, verdichtet und dadurch erwärmt. Der erste Verdichter 32 und der zweite Verdichter 34 sind dabei über jeweils eine Welle 35 mit der ersten Turbine 22 bzw. der zweiten Turbine 24 gekoppelt, so dass der erste Verdichter 32 und der zweite Verdichter 34 mit Hilfe der jeweiligen Welle 35 von der ersten Turbine 22 bzw. zweiten Turbine 24 antreibbar sind.

Nach der Verdichtung strömt die verdichtete Luft weiter zu einem in dem Ansaugtrakt 30 angeordneten Ladeluftkühler 36, durch welchen die Luft gekühlt wird. In Strömungsrichtung der Luft durch den Ansaugtrakt 30 ist stromab des Ladeluftkühlers 36 ein Ladeluftverteiler 38 angeordnet, mittels welchem die verdichtete und gekühlte Luft auf die ersten Zylinder 12 und die zweiten Zylinder 13 aufgeteilt wird.

Die verdichtete Luft wird in wohlbekannter Weise, entweder in einem Ottomotor, in einem Dieselmotor oder in einem Diesottomotor mit Kraftstoff vermischt und verbrannt, so dass Abgas am Ende des Verbrennungsvorganges in Zylindern der ersten Zylinder 12 und der zweiten Zylinder 13 vorliegt.

Das Abgas wird mittels in den Zylindern positionierter Kolben aus den Zylindern ausgeschoben. Wie der Fig. 1 zu entnehmen ist, wird das Abgas aus den Zylindern der ersten nebeneinander liegenden Zylinder 12 mittels eines ersten Abgaskrümmers 40 gesammelt.

Ferner ist in dem Abgastrakt 20 ein zweiter Abgaskrümmer 42 angeordnet, mit Hilfe dessen das Abgas der beiden Zylinder der zweiten nebeneinander liegenden Zylinder 13 sammelbar ist. Dadurch sind die beiden Zylinder der zweiten nebeneinander liegenden Zylinder 13 mit Hilfe des zweiten Abgaskrümmers 42 strömungstechnisch zusammengefasst.

Der erste Abgaskrümmer 40 weist eine erste Abgasflut 44 auf, während der zweite Abgaskrümmer 42 eine zweite Abgasflut 46 aufweist. Die erste Abgasflut 44 wird somit von dem Abgas der Zylinder der ersten Zylinder 12 durchströmt, wohingegend die zweite Abgasflut 46 von dem Abgas der Zylinder der zweiten Zylinder 13 durchströmt wird.

Wie in der Fig. 1 erkennbar ist, ist die erste Turbine 22 zweiflutig ausgebildet und weist eine erste, zur ersten Abgasflut 44 korrespondierende und mit dieser fluidisch verbundenen erste Flut 48 sowie eine zweite, zur zweiten Abgasflut 46 und mit dieser fluidisch verbundenen zweite Flut 50 auf. Dies bedeutet, dass die erste Flut 48 von dem Abgas aus der ersten Abgasflut 44 und damit von dem Abgas aus den beiden Zylindern der ersten Zylinder 12 durchströmt ist. Die zweite Flut 50 ist dabei von Abgas aus der zweiten Abgasflut 46 und damit von Abgas aus den beiden Zylindern der zweiten Zylinder 13 durchströmbar.

Die erste Flut 48 und die zweite Flut 50 sind dabei zumindest bereichsweise fluidisch voneinander getrennt, so dass eine Flutentrennung der ersten Turbine 22 dargestellt ist.

Über die erste Flut 48 und die zweite Flute 50 wird einem ersten Turbinenrad der ersten Turbine 22 das Abgas zugeführt, welches von dem Abgas angetrieben wird. Nach Antreiben des ersten Turbinenrads strömt das Abgas über einen ersten Turbinenradaustritt, in welchem das Abgas aus der ersten Flut 48 und aus der zweiten Flut 50 gesammelt wird, aus der ersten Turbine 22 aus, was durch einen Richtungspfeil 52 angedeutet ist.

In der dritten Stellung des Verstellventils 26 sind die erste Abgasflut 44, die zweite Abgasflut 46 und eine dritte Abgasflut 68, mit deren Hilfe die zweite Turbine 24 von Abgas aus der Verbrennungskraftmaschine durchströmbar ist, fluidisch miteinander verbunden, wie in der Fig. 1 durch eine gestrichelte Linie 66 angedeutet ist. Mit anderen Worten, die zweite Turbine 24 weist eine dritte Flut 70 auf, welche fluidisch mit der weiteren Abgasflut 68 verbunden ist.

Dies bedeutet, dass die Abgasmassenströme aus der ersten Abgasflut 44 und der zweiten Abgasflut 46 zu einem Gesamtabgasmassenstrom zusammengefasst werden, welcher die dritte Abgasflut 68 zusätzlich zu ersten Abgasflut 44 und zur zweiten Abgasflut 46 durchströmen kann, und anschließend die erste Turbine 22 und die zweite Turbine 24 durchströmt. Über die dritte Flut 70 der zweiten Turbine 24 wird einem zweiten Turbinenrad der zweiten Turbine 24 das Abgas zugeführt, so dass dieses von dem Abgas angetrieben wird. Nach Antreiben des zweiten Turbinenrads strömt das Abgas weiter, was durch den Richtungspfeil 52 angedeutet ist.

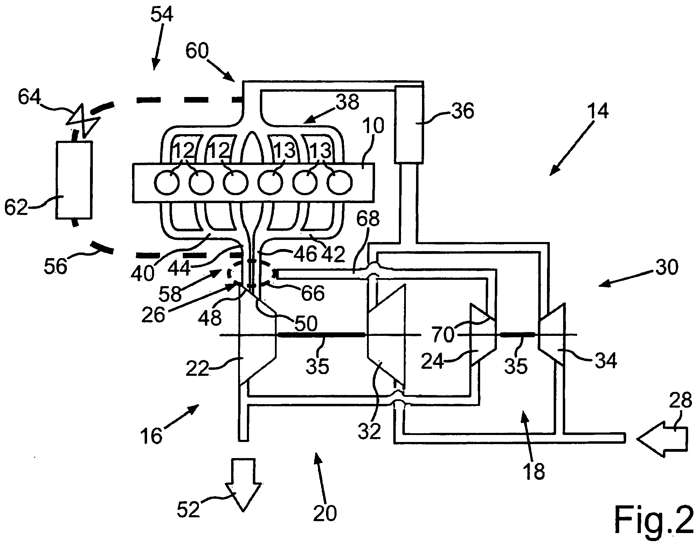

Diese vorteilhafte Schaltbarkeit des Verstellventils 26 und die vorteilhafte Zusammenführung der ersten Abgasflut 44, der zweiten Abgasflut 46 und der dritten Abgasflut 68 mittels des Verstellventils 26 können auch bei einer Verbrennungskraftmaschine 10 mit sechs Zylindern 12 eingesetzt werden, was in der Fig. 2 dargestellt ist.

Die Verbrennungskraftmaschine 10 umfasst ferner eine Abgasrückführeinrichtung 54 mit einer Rückführleitung 56. Die Rückführleitung 56 ist an einer Abzweigstelle 58 fluidisch mit der ersten Abgasflut 44 verbunden. Ferner ist die Rückführleitung 56 an einer Einleitstelle 60 fluidisch mit dem Ansaugtrakt 30 verbunden. So kann Abgas aus der ersten Abgasflut 44 abgezweigt, zu dem Ansaugtrakt 30 rückgeführt und an der Einleitstelle 60 in den Ansaugtrakt 30 eingeleitet werden. Dadurch ist es ermöglicht, dass die angesaugte und verdichtete Luft mit Abgas beaufschlagt werden kann. Das Abgas wird von der Luft in die Zylinder 12 transportiert und wirkt bei der Verbrennung des Luft-Kraftstoff-Gemisches als Inertgas, wodurch sich Stickoxid-Emissionen (NOx-Emissionen) sowie Ruß-Emissionen gering halten lassen.

Die Abgasrückführeinrichtung 54 umfasst einen zumindest teilweise in der Rückführleitung 54 angeordneten Abgasrückführkühler 62, mittels welchem das rückzuführende Abgas kühlbar ist. Darüber hinaus ist ein Abgasrückführventil 64 der Abgasrückführeinrichtung 54 vorgesehen. Mittels des Abgasrückführventils 64 kann eine gewünschte Menge an rückzuführendem Abgas variabel eingestellt werden. Dadurch kann die Menge an rückzuführendem Abgas bedarfsgerecht an unterschiedliche Betriebspunkte der Verbrennungskraftmaschine 10 angepasst werden.

Infolge der mehrflutigen Ausgestaltung der ersten Turbine 22 kann die erste Flut 44 als erste sogenannte AGR-Flut (AGR - Abgasrückführung) fungieren. Dabei hat die erste Abgasflut 44 und somit die erste Flut 48 vorwiegend die Aufgabe, ein besonders hohes Aufstauverhalten darzustellen, dass besonders hohe Mengen an Abgas zum Ansaugtrakt 30 rückgeführt werden können.

Dementsprechend sind die zweite Abgasflut 46 und damit die zweite Flut 50 als jeweilige sogenannte λ-Flut ausgebildet. Der zweiten Abgasflut 46 und damit der zweiten Flut 50 kommt insbesondere die Aufgabe zu, durch Versorgung der ersten Turbine 22 mit Abgas ein entsprechendes Luft-Kraftstoff-Verhältnis (Verbrennungsluft-Verhältnis λ) bereitzustellen, so dass die Verbrennungskraftmaschine 10 ein gefordertes Drehmoment und/oder eine geforderte Leistung bereitstellen kann.

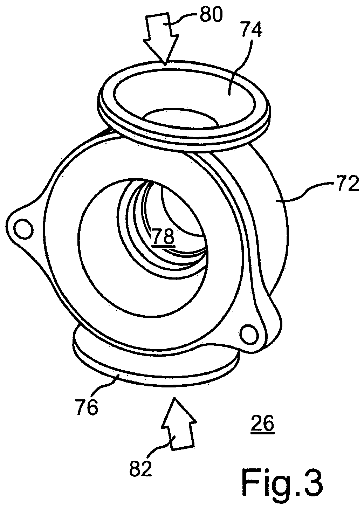

Die Fig. 3 zeigt das Verstellventil 26 der Aufladeeinrichtung 14 gemäß den Fig. 1 und 2. Das Verstellventil 26 weist einen Grundkörper 72 auf, an welchem ein erster Anschlussstutzen 74 und ein zweiter Anschlussstutzen 76 gehalten sind. Über den ersten Anschlussstutzen 74 kann das Verstellventil 26 fluidisch mit der ersten Abgasflut 44 verbunden werden, so dass das Abgas mit der ersten Abgasflut 44 über den ersten Anschlussstutzen 74 in einen durch den zumindest im Wesentlichen ringförmigen Grundkörper begrenzten Raum 78 des Verstellventils 26 einströmen kann. Dies ist durch einen Richtungspfeil 80 angedeutet.

Analog dazu kann das Verstellventil 26 über den zweiten Anschlussstutzen 76 fluidisch mit der zweiten Abgasflut 46 verbunden werden. So kann das die zweite Abgasflut 46 durchströmende Abgas über den zweiten Anschlussstutzen 76 in den Raum 78 einströmen. Dies ist in der Fig. 3 durch einen weiteren Richtungspfeil 82 angedeutet. Durch die entsprechenden Stellungen des Verstellventils 26 sowie entsprechende fluidische Verbindungen der ersten Turbine 22 sowie der zweiten Turbine 24 kann dann das Abgas aus der ersten Abgasflut 44 und der zweiten Abgasflut 46
- entweder getrennt voneinander an die erste Flut 48 und die zweite Flut 50 (Stoßaufladung erster Abgasturbolader 16 bzw. erste Turbine 22) oder
- im Raum 78 zusammengeführt und anschließend der ersten Flut 48 und der zweiten Flut 50 (Stauaufladung erster Abgasturbolader 16 bzw. erste Turbine 22) oder
- im Raum 78 zusammengeführt und anschließend der ersten Flut 48, der zweiten Flut 50 und der dritten Flut 70 (Registeraufladung Aufladeeinrichtung 14)
zugeführt werden.

Dies bedeutet, dass die Verbrennungskraftmaschine 10 mittels der ersten Turbine 22 und ihrer zwei Segmente in Form der ersten Flut 48 und der zweiten Flut 50 und die damit einhergehende Flutentrennung in einem Stoßaufladebetrieb betreibbar ist, während die Verbrennungskraftmaschine 10 in der zweiten Stellung des Verstellventils 26 durch die Zusammenführung der ersten Abgasflut 44 und der zweiten Abgasflut in einem Stauaufladebetrieb betreibbar ist bzw. dass die Verbrennungskraftmaschine 10 in der dritten Stellung des Verstellventils 26 durch die Zusammenführung der ersten Abgasflut 44, der zweiten Abgasflut 46 sowie der dritten Abgasflut 68 in einem Registerbetrieb betreibbar ist.

Selbstredend umfasst die Ventileinrichtung (26) ebenso eine Ventileinrichtung welche in nur zwei Stellungen, nämlich die erste Stellung und die dritte Stellung. Hier nimmt eine Schaltung der Ventileinrichtung (26) in die zweite Stellung einen infinitesimal kleinen Zeitraum ein, wobei dennoch die Schaltung in die zweite Stellung inkludiert ist, da vor einer Schaltung in die Registeraufladung die gemäß der Stossaufladung getrennte Fluten zuerst in eine Stauaufladung geführt werden müssen um eine Registeraufladung herbeiführen zu können.

## Patentansprüche

1. Verbrennungskraftmaschine für einen Kraftwagen, mit ersten nebeneinander liegenden Zylindern (12) und zweiten nebeneinander liegenden Zylindern (13), die als vierzylindrige oder sechszylindrige Hubkolben-Verbrennungskraftmaschine ausgebildet ist, und mit einem Abgastrakt (20) mit einem ersten Abgaskrümmer (40) und einem zweiten Abgaskrümmer (42), wobei die ersten Zylinder (12) dem ersten Abgaskrümmer (40) mit einer ersten Abgasflut (44) zugeordnet sind und die zweiten Zylinder (13) dem zweiten Abgaskrümmer (42) mit einer zweiten Abgasflut (46) zugeordnet sind, und mit einem ersten Abgasturbolader (16), wobei der erste Abgasturbolader (16) eine im Abgastrakt (20) angeordnete erste Turbine (22) umfasst und wobei in einer ersten Stellung eines Verstellventils (26) die erste Turbine (22) eine einzig von Abgas aus der ersten Abgasflut (44) der ersten Zylinder (12) durchströmbare Flut (48) und wenigstens eine zweite, in der ersten Stellung des Verstellventils (26) einzig von Abgas aus der zweiten Abgasflut (46) der zweiten Zylinder (13) durchströmbare Flut (50) aufweist und die Verbrennungskraftmaschine in einem Stoßaufladebetrieb betreibbar ist und wobei in der zweiten Stellung des Verstellventils (26) die erste Abgasflut (44) und die zweite Abgasflut (46) fluidisch zusammenführbar sind und die Verbrennungskraftmaschine in einem Stauaufladebetrieb betreibbar ist,
**dadurch gekennzeichnet, dass**
zumindest ein zweiter Abgasturbolader (18) eine im Abgastrakt (20) angeordnete zweite Turbine (24) umfasst, wobei die erste Turbine (22) und die zweite Turbine (24) mit Hilfe des einzelnen zwischen wenigstens drei Stellungen schaltbaren und stromauf der ersten Turbine (22) und der zweiten Turbine (24) angeordneten Verstellventils (26) wahlweise abwechselnd von zumindest einem Teil von Abgas aus den ersten Zylindern (12) und den zweiten Zylindern (13) antreibbar sind,
und wobei in der ersten Stellung die zweite Turbine (24) weder vom Abgas aus den ersten Zylindern (12) oder den zweiten Zylindern (13) antreibbar ist,
und wobei in der zweiten Stellung des Verstellventils (26) die zweite Turbine (24) weder vom Abgas aus den ersten Zylindern (12) oder den zweiten Zylindern (13) antreibbar ist,
und wobei in der dritten Stellung des Verstellventils (26) die erste Abgasflut (44), die zweite Abgasflut (46) und eine dritte Abgasflut (68) fluidisch zusammenführbar sind, wobei die dritte Abgasflut (68) zur Abgasanströmung der zweiten Turbine (24) ausgebildet ist und die Verbrennungskraftmaschine in einem Registeraufladebetrieb betreibbar ist.

2. Verbrennungskraftmaschine nach Anspruch 1,
**dadurch gekennzeichnet, dass**
die erste Turbine einen größeren von Abgas der Verbrennungskraftmaschine (10) durchströmbaren Strömungsquerschnitt aufweist als die zweite Turbine (24).

3. Verbrennungskraftmaschine nach Anspruch 1 oder 2,
**dadurch gekennzeichnet, dass**
der ersten Turbine (22) ein erster, von der ersten Turbine (22) antreibarer Verdichter (32) zum Verdichten von Luft und der zweiten Turbinen (24) ein zweiter, von der zweiten Turbine (24) antreibbarer Verdichter (34) zum Verdichten von Luft zugeordnet ist, wobei der erste Verdichter (32) und der zweite Verdichter (34) in einem Ansaugtrakt (30) der Verbrennungskraftmaschine (10) angeordnet sind, welcher die verdichtete Luft zuführbar ist.

4. Verbrennungskraftmaschine nach einem der vorhergehenden Ansprüche,
**dadurch gekennzeichnet, dass**
die ersten Zylinder (12) und die zweiten Zylinder (13) seriell oder parallel zueinander anordenbar sind.

5. Kraftwagen mit einer Verbrennungskraftmaschine (10) nach einem der vorhergehenden Ansprüche.

## Claims

1. Internal combustion engine, designed as a four- or six-cylinder reciprocating piston engine, for a motor vehicle, the engine comprising first cylinders (12) lying next to one another and second cylinders (13) lying next to one another and an exhaust train (20) with a first exhaust manifold (40) and a second exhaust manifold (42), wherein the first cylinders (12) are assigned to the first exhaust manifold (40) with a first exhaust flow (44) and the second cylinders (13) are assigned to the second exhaust manifold (42) with a second exhaust flow (46), and further comprising a first turbocharger (16), wherein the first turbocharger (16) comprises a first turbine (22) located in the exhaust train (20), and wherein, in a first position of an adjusting valve (26), the first turbine (22) has a flow (48) through which only exhaust gas from the first exhaust flow (44) of the first cylinders (12) can flow and at least one second flow (50) through which only exhaust gas from the from the second exhaust flow (46) of the second cylinders (13) can flow in the first position of the adjusting valve (26) and the internal combustion engine can be operated in a pulse turbocharging mode, and wherein, in the second position of the adjusting valve (26), the first exhaust flow (44) and the second exhaust flow (46) can be merged fluidically and the internal combustion engine can be operated in a constant pressure turbocharging mode,
**characterised in that**
at least one second turbocharger (18) comprises a second turbine (24) located in the exhaust train (20), wherein the first turbine (22) and the second turbine (24) can optionally be driven alternatively by at least a part of exhaust gas from the first cylinders (12) and the second cylinders (13) by means of the single adjusting valve (26), which is switchable between at least three positions and located upstream of the first turbine (22) and the second turbine (24),
and wherein, in the first position, the second turbine (24) can be driven neither by the exhaust gas from the first cylinders (12) nor by that from the second cylinders (13),
and wherein, in the second position of the adjusting valve (26), the second turbine (24) can be driven neither by the exhaust gas from the first cylinders (12) nor by that from the second cylinders (13),
and wherein, in the third position of the adjusting valve (26), the first exhaust flow (44), the second exhaust flow (46) and a third exhaust flow (68) can be merged fluidically,
wherein the third exhaust flow (68) is designed for applying exhaust gas to the second turbine (24) and the internal combustion engine can be operated in a register charging mode.

2. Internal combustion engine according to claim 1,
**characterised in that**
the first turbine has a larger flow cross-section for exhaust gas of the internal combustion engine (10) than the second turbine (24).

3. Internal combustion engine according to claim 1 or 2,
**characterised in that**
a first compressor (32) drivable by the first turbine (22) for compressing air is assigned to the first turbine (22) and a second compressor (34) drivable by the second turbine (24) for compressing air is assigned to the second turbine (24), wherein the first compressor (32) and the second compressor (34) are located in an intake train (30) of the internal combustion engine (10) to which the compressed air is to be fed.

4. Internal combustion engine according to any of the preceding claims,
**characterised in that**
the first cylinders (12) and the second cylinders (14) can be arranged in series or in parallel.

5. Motor vehicle with an internal combustion engine (10) according to any of the preceding claims.

## Revendications

1. Moteur à combustion interne pour un véhicule automobile, comprenant des premiers cylindres (12) juxtaposés et des seconds cylindres (13) juxtaposés qui se présente sous la forme d'un moteur à combustion à pistons alternatifs à quatre cylindres ou à six cylindres, et comprenant une ligne d'échappement (20) dotée d'un premier collecteur de gaz d'échappement (40) et d'un second collecteur de gaz d'échappement (42), les premiers cylindres (12) étant associés au premier collecteur de gaz d'échappement (40) doté d'un premier passage de gaz d'échappement (44) et les seconds cylindres (13) étant associés au second collecteur de gaz d'échappement (42) doté d'un second passage de gaz d'échappement (46), et comprenant un premier turbocompresseur à gaz d'échappement (16), le premier turbocompresseur à gaz d'échappement (16) comprenant une première turbine (22) disposée dans la ligne d'échappement (20) et dans une première position d'une soupape de réglage (26) la première turbine (22) présentant un passage (48) pouvant être parcouru uniquement par le gaz d'échappement provenant du premier passage de gaz d'échappement (44) du premier cylindre (12) et au moins un second passage (50) dans la première position de la soupape de réglage (26) pouvant être parcouru uniquement par le gaz d'échappement provenant du second passage de gaz d'échappement (46) du second cylindre (13) et le moteur à combustion interne pouvant fonctionner dans un mode de suralimentation à impulsion et dans la seconde position de la soupape de réglage (26) le premier passage de gaz d'échappement (44) et le second passage de gaz d'échappement (46) pouvant être en communication fluidique et le moteur à combustion interne pouvant fonctionner dans un mode de suralimentation à pression constante, **caractérisé en ce qu'**au moins un second turbocompresseur de gaz d'échappement (18) comprend une second turbine disposée dans la ligne d'échappement (20), la première turbine (22) et la second turbine (24) pouvant être entraînées, à l'aide de la seule soupape de réglage (26) disposée en amont de la première turbine (22) et de la seconde turbine (24) et commutable entre au moins trois positions, sélectivement en alternance par au moins une partie du gaz d'échappement provenant des premiers cylindres (12) et des seconds cylindres (13), et dans la première position la seconde turbine (24) pouvant être entraînée par les gaz d'échappement provenant soit des premiers cylindres (12) soit des seconds cylindres (13), et dans la deuxième position de la soupape de réglage (26) la seconde turbine (24) pouvant être entraînée par les gaz d'échappement provenant soit des premiers cylindres (12) soit des seconds cylindres (13), et dans la troisième position de la soupape de réglage (26) le premier passage de gaz d'échappement (44), le deuxième passage de gaz d'échappement (46) et un troisième passage de gaz d'échappement (68) pouvant être en communication fluidique, le troisième passage de gaz d'échappement (68) permet l'écoulement du gaz d'échappement dans la seconde turbine (24) et le moteur à combustion interne pouvant fonctionner dans un mode par suralimentation à registres.

2. Moteur à combustion interne selon la revendication 1, **caractérisé en ce que** la première turbine présente une section transversale d'écoulement plus grande pouvant être parcourue par le gaz d'échappement du moteur à combustion interne (10) que celle de la seconde turbine (24).

3. Moteur à combustion interne selon la revendication 1 ou 2, **caractérisé en ce que** la première turbine (22) est associée à un premier compresseur (32) entraîné par la première turbine (22) pour comprimer l'air et la seconde turbine est associée à un second compresseur (34) entraîné par la seconde turbine (24) pour comprimer l'air, le premier compresseur (32) et le second compresseur (34) étant disposés dans une ligne d'admission (30) du moteur à combustion interne (10), qui peut transporter l'air comprimé.

4. Moteur à combustion interne selon l'une quelconque des revendications précédentes, **caractérisé en ce que** les premiers cylindres (12) et les seconds cylindres (13) peuvent être montés en série ou parallèles les uns par rapport aux autres.

5. Véhicule automobile équipé d'un moteur à combustion interne (10) selon l'une quelconque des revendications précédentes.
